**Europäisches Patentamt**

**European Patent Office**

**Office européen des brevets**

(19)

(11) Veröffentlichungsnummer: **0 066 233**
**B1**

(12)

# EUROPÄISCHE PATENTSCHRIFT

(45) Veröffentlichungstag der Patentschrift:
**05.11.86**

(21) Anmeldenummer: **82104543.2**

(22) Anmeldetag: **25.05.82**

(51) Int. Cl.⁴: **C 08 G 12/12,** C 08 G 12/40,
C 08 J 9/14

(54) **Harnstoff-Formaldehydharz, seine Herstellung und seine Verwendung.**

(30) Priorität: **29.05.81 DE 3121281**

(43) Veröffentlichungstag der Anmeldung:
**08.12.82 Patentblatt 82/49**

(45) Bekanntmachung des Hinweises auf die Patenterteilung:
**05.11.86 Patentblatt 86/45**

(84) Benannte Vertragsstaaten:
**BE CH DE FR GB LI NL**

(56) Entgegenhaltungen:
**AT-B-249 383**
**US-A-3 962 166**

**Die Akte enthält technische Angaben, die nach
dem Eingang der Anmeldung eingereicht wurden
und die nicht in dieser Patentschrift enthalten sind.**

(73) Patentinhaber: **Schöllhorn, Wolf- Dietrich,
Jakobstrasse 29, D-6718 Grünstadt (DE)**

(72) Erfinder: **Schöllhorn, Wolf- Dietrich, Jakobstrasse
29, D-6718 Grünstadt (DE)**

(74) Vertreter: **Ratzel, Gerhard, Dr., Seckenheimer
Strasse 36a, D-6800 Mannheim 1 (DE)**

EP 0 066 233 B1

## Beschreibung

Die Erfindung betrifft ein stark exotherm härtendes Harnstoff-Formaldehydharz, Verfahren zur Herstellung sowie daraus gewonnene Schaumprodukte.

Schaumprodukte auf Basis Harnstoff-Formaldehyd zählen zu den ältesten Kunststoffschäumen und sind hinlänglich bekannt. Auch die Verfahren zur Herstellung solcher Schäume sind Inhalt vieler Patentschriften und haben sich bis heute im wesentlichen nicht geändert.

Bei der heute praktizierten Schäummethode zur Herstellung von Harnstoff-Formaldehyd-Schaumstoffen wird Wasser, versetzt mit einem Schaummittel und mit Härtersäure durch mechanisches Schlagen bei gleichzeitigem Einblasen von Luft zu einem sogenannten Trägerschaum verarbeitet. Auf diesen Trägerschaum wird dann eine wässrige, ca 40%ige Harnstoff-Formaldehydharzlösung verteilt. Dieser stark wasserhaltige Schaum härtet nach kurzer Zeit und trocknet. Beim Trocknen platzt ein Großteil der Zellen auf, so daß ein offenporiger Schaumstoff resultiert. Die mechanischen Eigenschaften dieser Schäume sind äußerst gering, weshalb dieser Schaumstoff nicht als plattenware in den Handel gebracht werden kann. Die Verschäumung von Harnstoff-Formaldehydharzen erfolgt daher praktisch ausschließlich im nicht stationären, dem sogenannten "Isoschaum-Verfahren", vor Ort.

Die verfahrensbedingten Raumgewichte solcher Schäume liegen bei 5 bis 10 kg/m$^3$ und weisen eine Druckspannung von 0,1 bis 0,3 kp/cm$^2$ auf (Aminoplaste, Bachmann/Bertz, 1970, 154).

Andere Schäummethoden beschrieben in der französischen Patentschrift 1 091 086 und in der amerikanischen Patentschrift 2 789 095, bestehen darin, daß in dem Harnstoff-Formaldehydharz ein niedrig siedendes organisches Treibmittel emulgiert wird und die Aufschäumung der Masse durch Zufuhr von Wärme und/oder Verminderung des Umgebungsdruckes erfolgt.

Eine weitere Verschäumungstechnologie wird in der DE-PS 2 438 465 beschrieben. Diese Methode arbeitet nach dem physikalischen und/oder chemischen Treibverfahren, in dem der Härtungsreaktion des Harnstoff-Formaldehydharzes zum polykondensierten Aminoplasten eine exotherme, gasabspaltende Reaktion gleichgeschaltet wird, welche die Aufschäumung der Harzmischung bewirkt. Die Aufschäumung kann durch Zusatz eines niedrig siedenden Treibmittels verstärkt werden.

Bekanntermaßen gehören Harnstoff-Formaldehydharze zu den bei normaler Temperatur kalthärtenden Kondensationsprodukten (Kunststoff-Handbuch X, 1968, 467). Aufgrund dieser Bekenntnis kann die Verschäumung dieser Harze bis heute erfolgen durch:

1. mechanisches Schlagen
2. Einblasen eines Gases
3. äußere Wärmezufuhr
4. Verminderung des Umgebungsdruckes
5. Gleichschaltung einer gasabspaltenden, exothermen Reaktion

Die Kondensation der handelsüblichen Schaumharze erfolgt im sauren Milieu nach folgendem Verfahren:

Formalin wird mit NaOH gegebenenfalls unter Zusatz von Plastifizierungsmittel (z.B. Hexantriol) neutralisiert, der Harnstoff zugegeben und nach Auflösen desselben etwa 30 Minuten zum Sieden erhitzt. Während dieser Zeit muß der pH-Wert laufend kontrolliert werden und zwischen 5 und 8 liegen. Anschließend ist der pH-Wert auf 5 einzustellen und 3o bis 4o Minuten weiter zu kondensieren. Nach Erreichen des gewünschten Kondensationsgrades erfolgt die Neutralisation. In dieser Form ist die Harzlösung zur Weiterverarbeitung bereit. Die Molverhältnisse Formaldehyd:Harnstoff bewegen sich zwischen 1,6 bis 2:1 (Aminoplaste, Bachmann/Bertz, 1970, 155).

Diese Harze polykondensieren ohne merkliche Wärmetönung zu Aminoplasten.

In der DE-PS 24 36 465 wurde das verwendete Schaumharz in alkalischem Medium kondensiert. Auch dieses Harz härtete ohne merkliche Wärmetönung und konnte nur durch Gleichschaltung einer exothermen, gasabspaltenden Reaktion verschäumt werden.

Die US-PS 39 62 166 beschreibt ein Verfahren zur Herstellung einer stabilen Mischung von Methylol-Harnstoff und Wasser, wobei der genannte Methylol-Harnstoff ein Harnstoff zu Formaldehyd-Verhältnis im Bereich von 1:1,4 bis 1:2,8 hat, einen freien Formaldehydgehalt von weniger als etwa 3% und eine Methylol-Harnstoff-Konzentration größer als 60%, basierend auf dem Gewicht der Mischung, aufweist, wobei er erhalten wird durch

a) pH-Anpassung auf einen Wert größer als 10 einer wässrigen Harnstoff-Formaldehyd-Mischung (Harnstoff zu Formaldehyd größer l:5; Feststoffgehalt 20 bis 60%),

b) Erhitzen,

c) Anpassung des Harnstoff-Formaldehyd-Verhältnisses auf 1:1,4 bis 1:2,8 während b) durch Harnstoff-Zugabe, und a) Abkühlen der Reaktionsmischung auf Raumtemperatur und anschließende pH-Einstellung auf pH = 7,5 bis 8,0.

Die österreichische Patentschrift AT-PS 249-383 betrifft ein Verfahren zur Herstellung einer gegen Hitzeeinwirkung durch Ausbildung einer aufgeblähten, wärmeisolierenden, kohlehaltigen Schutzschicht an seiner Oberfläche widerstandsfähigen, organischen Formkörpers mit Zellstruktur aus Aminoplastvorkondensaten, einem Treibmittel und sauren Härtern. Dabei wird als intumeszierender (unter Wärmeeinwirkung anschwellender) Zusatz wenigstens ein Saccharid oder ein Polyol mit zumindest vier OH-Gruppen in Mengen von 10 bis 65% und ein Blähmittel in einer Menge von mindestens 5%, bezogen auf das Aminoplastvorkondensat, gegebenenfalls unter Zusatz von Füll- und Verstärkungsstoffen, gleichmäßig in der Lösung oder Dispersion eines Aminoplastvorkondensates verteilt, das Gemisch in an sich bekannter Weise geschäumt und der viskose Schaum im sauren pH-Bereich ausgehärtet. Das Aminoplastvorkondensat kann ein Harnstoff-, Thioharnstoff-, Guanidin-Dicyandiamid-, Guanamin- oder Melamin-Formaldehyd-Kondensationsprodukt sein.

Es ist bekannt, daß bei der Herstellung von Aminoplastharzen durch geringfügige änderung des Verhältnisses der Ausgangskomponenten, des pH-Wertes, der Reaktionsdauer und -temperatur durch die sich sehr leicht verschiebenden Gleichgewichte sehr verschiedenartige Produkte entstehen können.

Die Verfahren des Standes der Technik liefern keine zur Verschäumung gut geeigneten Harnstoff-Formaldehydharze.

Demgegenüber liegt vorliegender Erfindung die Aufgabe zugrunde, Harnstoff-Formaldehydharze zu liefern, die Schäume feinzelliger Art, hoher Abriebfestigkeit, geringer Zellkernstörung, offenporiger oder geschlossenzelliger Art, geringer oder nicht vorhandener Brennbarkeit und gegebenenfalls Ausbildung einer Kohleschaumschicht bei Flammeinwirkung liefert.

Diese Aufgabe wird erfindungsgemäß bei einem Harnstoff-Formaldehydharz der eingangs genannten Gattung dadurch gelöst,

a) Kondensation von 1 Mol Harnstoff mit 1,2 bis 3 Mol, vorzugsweise jedoch mit 1,7 bis 2,2 Molen Formaldehyd in. ausschließlich alkalischem Medium bei einem Anfangs- ph-Wert der wässrigen handelsüblichen Formaldehydlösung von 8 bis 12, vorzugsweise 9 bis 11,

b) in Gegenwart von 1 bis 10 mMolen NaOH und 10 bis 80 mMolen $NH_3$ oder

in Gegenwart von 2,5 bis 50 m Molen Guanidin-Base und 0 bis 80 mMolen $NH_3$ pro 1 Mol Formaldehyd, bei

c) einer Kondensationstemperatur von 80 bis 105° C und

d) einer Kondensationsdauer von 2 bis 4 Stunden, vorzugsweise 2,5 bis 3,5 Stunden und

e) anschließender Aufkonzentrierung im Vakuum auf 75 bis 100 % Feststoffgehalt.

Besondere Ausführungsformen sind dadurch gekennzeichnet, daß vor, während oder nach, vorzugsweise jedoch vor der Kondensation Kohlenhydrate und/oder deren thermischen Zersetzungsprodukte bis zu 2o Gew.-%, bezogen auf den Feststoffgehalt, zugesetzt werden,

daß als Kohlenhydrate Rohrzucker eingesetzt wird,

daß als thermische Zersetzungsprodukte der Kohlenhydrate Karamel bzw. Zuckercouleur eingesetzt wird,

daß vor, während oder nach der Kondensation Cyanamid bzw. Dicyandiamid in Mengen von 5 bis 80 mMolen pro 1 Mol Harnstoff zugesetzt wird,

daß es eine Reaktivität von 10 bis 90° C, vorzugsweise 3o bis 60° C aufweist, und

daß' es eine Viskosität von 4 bis 3o Pa.s, vorzugsweise 4 bis 10 Pa.s bei 25° C bei einem Feststoffgehalt von z.B. 83 % aufweist.

Beansprucht wird weiterhin die Verwendung des erfindungsgemäßen stark exotherm härtenden Harnstoff-Formaldehydharzes zur Herstellung von Schaumprodukten.

Die Erfindung betrifft weiterhin ein Verfahren zur Herstellung von Schaumprodukten aus erfindungsgemäßem stark exotherm härtendem Harnstoff-Formaldehydharz, dadurch gekennzeichnet, daß in Gegenwart von Emulgatoren, niedrig siedenden Treibmitteln wie z.B. n-Pentan, Monofluortrichlormethan und gegebenenfalls in Gegenwart weiterer Zusatzstoffe wie Plastifizierungsmittel, Flammschutzmittel, Füllstoffe, Fasern, Verstärkungsmittel und Farbstoffe durch Zugabe eines Härtungskatalysators das Harz in stark exothermer Bildungsreaktion zum Aminoplasten polykondensiert und dabei die Mischung selbständig aufschäumt und erstarrt.

Besondere Ausführungsformen des erfindungsgemäßen Verfahrens sind dadurch gekennzeichnet,

daß als Härtungskatalysator Phosphorsäure eingesetzt wird,

daß der Harzlösung und/oder der Härtersäure ein Amin, vorzugsweise Triäthanolamin, in Mengen von 0,3 bis 10 Gew.-% bezogen auf den Feststoffgehalt zugesetzt wird,

daß die Verschäumung in Gegenwart von Kohlenhydraten, vorzugsweise Rohrzucker und/oder dessen Zersetzungsprodukten, in Mengen bis zu 20 Gew.-% bezogen auf den Feststoffgehalt, durchgeführt wird, und

daß die Verschäumung in Gegenwart von Cyanamid bzw. Dicyandiamid, in Mengen von o,5 bis 10 Gew.-%, vorzugsweise 1 bis 5 Gew.-% bezogen auf den Feststoffgehalt, durchgeführt wird.

Beansprucht werden weiterhin erfindungsgemäße Schaumprodukte, die dadurch gekennzeichnet sind,

daß sie bei Einwirkung von Feuer oder Strahlungshitze eine stark aufschäumende Kohleschutzschicht ausbilden.

Wünschenswert für die Herstellung von Harnstoff-Formaldehydschaumstoffen erschien deshalb ein Harnstoff-Formaldehydharz, welches durch Zugabe eines Härtungskatalysators mit stark exothermer Bildungsreaktion zum Aminoplasten polykondensiert und die dabei entstehende Wärmetönung ein zugesetztes flüssiges Treibmittel,in Gegenwart eines Emulgators und gegebenenfalls anderen Zusatzstoffen, verdampft und dabei die Harzmischung aufschäumt und erstarrt.

Es wurde somit überrasehenderweise gefunden, daß reaktive mit stark exothermer Bildungsreaktion härtende Harnstoff-Formaldehydharze, welche sich hervorragend zur Verschäumung eigenen, hergestellt werden können, wenn bestimmte Reaktionsbedingungen eingehalten werden.

Der pH-Wert verbleibt während der gesamten Kondensationsdauer im alkalischen Bereich und ist gegen Ende der Reaktion auf ca. 7.5 abgesunken.

Die Mitverwendung von Kohlenhydraten in Harnstoff-Formaldehydharzen ist bekannt und wird in dem Handbuch "Chemie und Technologie der künstlichen Harze" beschrieben.

In den erfindungsgemäßen Harnstoff-Formaldehydharzen bewirkt die Mitverwendung von Zucker und/oder dessen Zersetzungsprodukten eine wesentlich verbesserte Lagerstabilität und erhöht die Flammfestigkeit daraus hergestellter Schäume, in dem bei Flamm- oder Hitzeeinwirkung sich sofort eine schützende Kohleschaumschicht ausbildet.

Nachteilig wirkte sich die Anwesenheit von Zucker und/oder dessen Zersetzungsprodukten hinsichtlich der Zellqualität bei den Schäumen dahingehend aus, daß deren Zellkern z.T. stark gestört war. Diese Zellkernstörung trat überraschender weise nicht auf, wenn die Verschäumung in Anwesenheit von Cyanamid bzw. Dicyandiamid durchgeführt wurde.

Auch bei Zusatz von Melamin wurde dieser Effekt beobachtet. Melamin hat jedoch, im Gegensatz zu Cyanamid bzw. Dicyandiamid, den Nachteil, daß es die Ausbildung einer Kohleschaum-Schutzschicht bei Flammeinwirkung verhindert.

Als wirkungsvolle Flammschutzmittel in den erfindungsgemäßen Schaumstoffen erwiesen sich Amine, welche dem Harz und/oder dem Härtungskatalysator in Mengen bis ca. 10 % zugesetzt wurden. Vorzugsweise wird als Amin Triäthanolamin eingesetzt. Eine flammtechnische Verschlechterung der Schaumprodukte wurde dann festgestellt, wenn Amine zur Einstellung des alkalischen pH-Wertes bei der Kondensation des Harzes verwendet wurden.

Überraschenderweise stellte sich auch heraus, daß der Zusatz von Aminen die Zellbeschaffenheit der Schäume stark beeinflußt. Bei Anwesenheit von Aminen resultieren bei dem erfindungsgemäßen Schäumverfahren überwiegend offenporige, bei Abwesenheit überwiegend geschlossenzellige Schäume.

In den folgenden Beispielen wird das erfindungsgemäße Harnstoff-Formaldehydharz, seine Herstellung und Verwendung als Schaumharz und die daraus hergestellten Schaumprodukte beschrieben.

## Beispiel 1

Herstellung des Harnstoff-Formaldehydharzes:
In einem 4 l Dreihalskolben, ausgerüstet mit Thermometer, Rückflußkühler und einer pH-Meßvorrichtung sowie Heizbad mit Magnetrührer werden 2380 g (29,59 Mole) 40 Vol.%iges Formalin vorgelegt. Durch Zugabe von 20 g (0,33 Mole) freier Guanidin-Base stellt sich ein pH-Wert von 10,2 bei 25°C ein. Die Lösung wird auf ca. 50°C erwärmt und unter kräftigem Rühren 960 g (16 Mole) Harnstoff zugegeben. Die Mischung wird während ca. 30 Minuten bis zum Sieden erhitzt. Der Harnstoff hat sich in dieser Zeit gelöst, so daß eine wasserklare Lösung vorliegt, welche bei 93 bis 95°C siedet. Nun wird der Ansatz bei gelindem Sieden 3 Stunden kondensiert. Nach der Kondensation ist der pH-Wert auf ca. 7,5 abgefallen. Anschließend wird die wasserklare Lösung mit Hilfe eines Rotationsverdampfers im Vakuum eingeengt. Nach Abzug von ca. 1455 ml Destillat verbleiben noch ca. 1805 g wasserklares bis leicht getrübtes Harnstoff-Formaldehydharz.

Die Reaktivität des Harzes beträgt 47°C.

Unter der "Reaktivität" wird in allen Beispielen die Temperaturerhöhung in °C verstanden, welche eine Harzprobe von 50 g bei Vermischung mit 5 g $H_3PO_4$ 85-%ig erfährt.

Der Test erfolgt in einem Polyäthylenbecher mit einem oberen Durchmesser von 6 und einem unterem Durchmesser von 5,5 cm bei einer Höhe von 7 cm. Während der Messung wird der Becher 4 cm tief in ein entsprechendes Loch eines Harnstoff-Formaldehydschaumblöckchens gestellt.

Gemischt wird während 20 s. mit einem Thermometer, welches zur Messung dann so in die Masse gehalten wird, daß es die Wandung und den Boden des Gefäßes nicht berührt. Abgelesen wird die maximale Temperaturerhöhung.

Verschäumung des Harzes aus Beispiel 1
Die Verschäumung erfolgte in allen Beispielen nach folgendem Schema:

1. Einwiegen des Harzes, Emulgators, Treibmittels und gegebenenfalls weiterer Zusätzen in einen Polyäthylenbecher
2. Vermischung der Komponenten mit einem Flügelrührer (ca. 3000 U/Min.) ca 30 s.
3. Zugabe des Härtungskatalysators und intensives Vermischen während 30 bis 50 s. wie unter 2.

Je nach Temperatur der Ausgangsstoffe und der Reaktivität des eingesetzten Harzes setzt die Schäumreaktion nach 30 bis 60 s ein. Es hat sich als zweckmäßig erwiesen, wenn das aufschäumende Gemisch, zwecks Verminderung von Wärmeverlusten, namentlich bei kleinen Schäumansätzen, in einem Wärmeschrank bei einer Temperatur von 40 bis 70°C gestellt wird, wo der Schaum bis zur vollständigen Aushärtung und Austrocknung verbleibt.

Die Aufschäumungsphase ist stark abhängig von der Katalysatormenge, Temperatur, Reaktivität des Harzes, der Ansatzgröße und der Mischintensität und liegt bei ca. 3 bis 10 Minuten.

Die Volumenvergrößerung der Mischung ist abhängig von der Treibmittelmenge.

Schaumrezeptur 1: 100 g Harz aus Beispiel 1
   1 g Pril (=Alkylsulfate und Alkylbenzolsulfonate)
   8 g n-Pentan

8 g $H_3PO_4$ 80-%ig
Raumgewicht: 31,8 kg/m³
Druckspannung: 1,3 kp/cm²
Der Schaum ist sehr feinzellig, abriebfest und überwiegend geschlossenzellig.

Nach Wegnahme einer Zündflamme brennt der Schaum noch nach.

Eine Kohleschaumschicht bildet sich nicht aus.

Schaumrezeptur 2: 300 g Harz aus Beispiel 1
3 g pril(Alkylsulfate und Alkylbenzolsulfate)
30 g Zuckercouleur
3 g Triäthanolamin
30 g n-Pentan
30 g $H_3PO_4$ 80-%ig
Raumgewicht: 26,9 kg/m³
Druckspannung: 1,0 kp/cm²
Der Schaum ist feinzellig, abriebfest und überwiegend offenporig, der Zellkern ist leicht gestört.

Er brennt nicht und bildet eine sehr gute Kohleschaumschicht aus.

Schaumrezeptur 3: 100 g Harz aus Beispiel 1
1 g Pril ( = Alkylsulfate und Alkylbenzolsulfonat)
10 g Zuckercouleur
3 g Triäthanolamin
10 g n-Pentan
12 g $H_3PO_4$ 80-%ig
Raumgewicht: 38,6 kg/m³
Der Schaum ist sehr feinzellig, abriebfest und überwiegend offenporig, der Zellkern ist leicht gestört.

Nach Wegnahme einer Zündflamme brennt der Schaum nicht nach und bildet eine stark aufschäumende Kohleschutzschicht aus.

**Beispiel 2**

Die Herstellung des Harzes erfolgt analog Beispiel 1.

2380 g 40 Vol %iges Formalin (29,59 Mole) werden mit 57 ml $NH_3$ 33-%ig (0,97 Mole) und 24 ml NaOH 20-%ig (0,146 Mole) versetzt, wobei sich ein pH-Wert von 10,6 bei 25°C einstellt.

Bei ca. 40°C werden 960 g Harnstoff (16 Mole) und 190 g Zucker (0,55 Mole) zugesetzt. Bei einem Siedepunkt von 90 bis 92°C wird 3 Stunden kondensiert, wobei der pH-Wert auf 8,1 absinkt. Nach Abzug von ca. 1455 ml Destillat verbleiben ca. 2012 g Harz mit einem Feststoffgehalt von 86 % und einer Viskosität von 31 Pa.s bei 16,5°C. Die Reaktivität des Harzes beträgt 47°C.

Schaumrezeptur 4: 50 g Harz aus Beispiel 2
2,4g $H_2O$
0,5 g Pril ( = Alkylsulfate und Alkylbenzolsulfonate)
4 g n-Pentan
5 g $H_3PO_4$ 80-%ig
Der Zellkern des Schaumes ist gestört.

Die Ausbildung einer Kohleschaumschicht ist mäßig.

Schaumrezeptur 5: 250 g Harz aus Beispiel 2
12 g $H_2O$
2,5 g Pril( = Alkylsulfate und

Alkylbenzolsulfonate)
15 g n-Pentan
32,5 g $H_3PO_4$ 80-%ig/Triäthanolamin 8 Tl/ 2 Tl
Der Schaum ist feinzellig, abriebfest und weitgehend offenporig. Er brennt nicht und bildet eine sehr gute Kohleschaumschicht aus.

**Beispiel 3**

Herstellung des Harzes erfolgt analog Beispiel 1

3000 g 40 Vol%iges Formalin (37,3Mole) werden mit 25ml $NH_3$ 33-%ig (0,42 Mole) und 40 g freier Guanidin-Base 90,5-%ig (0,61 Mole) versetzt, wobei sich ein pH-Wert von 9,6 einstellt. Bei 40°C erfolgt die Zugabe von 1150 g Harnstoff (19,17Mole), 84,7g Dicyandiamid (1Mol) und 220 g Zucker (0,64Mole). Beim Siedepunkt von 92 bis 94°C wird 3 Stunden kondensiert. Nach Abzug von 1640 ml Destillat verbleiben 2717 g Harz mit einem Feststoffgehalt von 81,7% und einer Viskosität von 12 Pa.s bei 13,5°C.

Die Reaktivität des Harzes beträgt 40°C.

Schaumrezeptur 6: 100 g Harz aus Beispiel 3
1 g Pril (Alkylsulfate und Alkylbenzolsulfonate)
8 g n-Pentan
8 g $H_3PO_4$ 80-%ig
Raumgewicht: 29,6 kg/m³
Druckspannung: 1,0 kp/cm²
$H_2O$-Aufnahme: 14,9 Vol%
Der Schaum ist feinzellig, abriebfest und überwiegend geschlossenporig. Der Zellkern ist nicht gestört.

Oberflächlich brennt der Schaum noch ab, die Ausbildung einer Kohleschaumschicht ist mäßig.

Schaumrezeptur 7: 100 g Harz aus Beispiel 3
1 g Pril( = Alkylsulfate und Alkylbenzolsulfonate)
8 g n-Pentan
12 g $H_3PO_4$ 80-%ig/Triäthanolamin 8 Tl/2Tl
Raumgewicht: 30,4 kg/m³
Druckspannung: 1,2 kp/cm²
$H_2O$-Aufnahme: 60,5 Vol%
Der Schaum ist feinzellig, abriebfest und überwiegend offenporig. Er brennt nicht und bildet eine sehr gute Kohleschaumschicht aus.

Schaumrezeptur 8: 100 g Harz aus Beispiel 3
1,5 g Haar-Shampoo gegen Schuppen (F a. Schwarzkopf) = Fettsäurekondensationsprodukte
8 g n-Pentan
8 g $H_3PO_4$ 80-%ig
Raumgewicht: 29,1 kg/m³
Druckspannung: 1,0 kp/cm²
Der Schaum ist feinzellig, abriebfest und überwiegend geschlossenzellig.

Er brennt nicht und bildet eine sehr gute Kohleschaumschicht aus.

**Beispiel 4**

Die Herstellung des Harzes erfolgt analog Beispiel 1.

3000 g Formalin 40-%ig (37,3 Mole) werden mit 40 g 90,5-%iger Guanidin-Base (0,61 Mole) versetzt, wobei sich ein pH-Wert von 9,6 bei 25°C einstellt. Bei 50°C werden 1190 g Harnstoff (19,83 Mole), 28g Dicyandiamid (0,33 Mole) und 80 g Zucker (0,23 Mole) zugegeben. Beim Siedepunkt von 92 bis 94°C wird 3 Stunden kondensiert, wobei der pH-Wert auf 7,5 absinkt. Durch Zugabe von 17 g $H_3PO_4$ 80-%ig und Glycerin wasserfrei im Verhältnis 1:1 wird der Ansatz nahezu neutralisiert. Nach Abzug von 1725 ml Destillat verbleiben 2467g Harz mit einem Feststoffgehalt von 83,5%, einer Viskosität von 19 Pa.s bei 15°C und einem pH-Wert von 9,7.

Die Reaktivität beträgt 42,5°C.

Schaumrezeptur 9: 50 g Harz aus Beispiel 4
2 g Polyäthylenglycol 200
0,75 g Shampoo gegen Schuppen
=Fettsäurekondensationsprodukte
4 g n-Pentan
4,5 g $H_3PO_4$ 80-%ig
Raumgewicht: 22,8 kg/m$^3$
Druckspannung: 0,87 kp/cm$^2$

Der Schaum ist feinporig, abriebfest und überwiegend geschlossenporig.

Er brennt oberflächlich noch nach und bildet eine mäßige Kohleschaumschicht aus.

Schaumrezeptur 10: 50 g Harz aus Beispiel 4)
1,25g Dicyanidiamid) gelöst
0,75 g Shampoo gegen Schuppen
=Fettsäurekondensationsprodukte
3,5 g Zuckercouleur
4 g n-Pentan
4,5 g $H_3PO_4$ 80-%ig
Raumgewicht: 33 kg/m$^3$
Druckspannung: 1,6 kp/cm$^2$

Der Schaum ist feinzellig, abriebfest und überwiegend geschlossenzellig. Er brennt kaum nach und bildet eine sehr gute Kohleschaumschicht aus.

Schaumrezeptur 11: Die Verschäumung wurde auf einer 2-Komponenten-Schäummaschine, wie sie zur Herstellung von Polyurethanschaum eingesetzt wird, vorgenommen.

Als Komponente A wurde eine Vormischung aus
106 Teilen Harz aus Beispiel 4
8 Teilen n-Pentan
1,5 Teilen Shampoo gegen
Schuppen = Fettsäurekondensationsprodukte
als Komponente B eine Mischung aus
480 Teilen $H_3PO_4$ 75-%ig
200 Teilen Zucker
200 Teilen Polyäthylenglykol 200
52,5 Teilen $H_2O$

Das Mischungsverhältnis der Komponenten A:B betrug 100:15

Der resultierende Schaumstoff entsprach in Qualität und Aussehen denen aus Handansätzen hergestellten Schäumen.

Raumgewicht: 25,4 kg/m$^3$ Druckspannung: 1,56

kp/cm$^2$

Der Schaum ist feinzellig, abriebfest und überwiegend geschlossenzellig.

Er brennt nicht und bildet eine sehr gute Kohleschaumschicht aus.

**Patentansprüche**

1. Stark exotherm härtendes Harnstoff-formaldehydharz,
dadurch gekennzeichnet,
daß es erhalten wird durch
a) Kondensation von 1 Mol Harnstoff mit 1,2 bis 3 Mol, vorzugsweise jedoch mit 1,7 bis 2,2 Molen Formaldehyd in ausschließlich alkalischem Medium bei einem Anfangs-pH-Wert der wässrigen handelsüblichen Formaldehydlösung von 8 bis 12, vorzugsweise 9 bis 11,
b) in Gegenwart von 1 bis 10 m Molen NaOH und 10 bis 80 m Molen $NH_3$ oder
in Gegenwart von 2,5 bis 50 m Molen Guanidin-Base und 0 bis 80 m Molen $NH_3$ pro 1 Mol Formaldehyd, bei
c) einer Kondensationstemperatur von 80 bis 105°C und
d) einer Kondensationsdauer von 2 bis 4 Stunden, vorzugsweise 2,5 bis 3,5 Stunden und
e) anschließender Aufkonzentrierung im Vakuum auf 75 bis 100 % feststoffgehalt.

2. Stark exotherm härtendes Harnstoff-formaldehydharz nach Anspruch 1,
dadurch gekennzeichnet,
daß vor, während oder nach, vorzugsweise jedoch vor der Kondensation Kohlenhydrate und/oder deren thermischen Zersetzungsprodukte bis zu 20 Gew.-%, bezogen auf den feststoffgehalt, zugesetzt werden.

3. Stark exotherm härtendes Harnstoff-formaldehydharz nach Anaprüchen 1 bis 2,
dadurch gekennzeichnet,
daß als Kohlenhydrate Rohrzucker eingesetzt wird.

4. Stark exotherm härtendes Harnstoff-Formaldehydharz nach Ansprüchen 1 bis 3,
dadurch gekennzeichnet,
daß als thermische Zersetzungsprodukte der Kohlenhydrate Karamel bzw. Zuckercouleur eingesetzt wird.

5. Stark exotherm härtendes Harnstoff-Formaldehydharz nach Ansprüchen 1 bis 4,
dadurch gekennzeichnet,
daß vor, während oder nach der Kondensation Cyanamid bzw. Dicyandiamid in Mengen von 5 bis 60 mMolen pro 1 Mol Harnstoff zugesetzt wird.

6. Stark exotherm härtendes Harnstoff-Formaldehydharz nach Ansprüchen 1 bis 5,
dadurch gekennzeichnet,
daß es eine Reaktivität von 10 bis 90°C, vorzugsweise 30 bis 60°C aufweist.

7. Stark exotherm härtendes Harnstoff-Formaldehydharz nach Ansprüchen 1 bis 6,
dadurch gekennzeichnet,

daß es eine Viskosität von 4 bis 30 Pa.s, vorzugsweise 4 bis 10 Pa.s bei 25°C bei einem Feststoffgehalt von z.B. 83 % aufweist.

8. Verwendung des stark exotherm härtenden Harnstoff-Formaldehydharz nach Ansprüchen 1 bis 7 zur Herstellung von Schaumprodukten.

9. Verfahren zur Herstellung von Schaumprodukten aus stark exotherm härtenden Harnstoff-Formaldehydharz nach Ansprüchen 1 bis 7,

dadurch gekennzeichnet,

daß in Gegenwart von Emulgatoren, niedrig siedendem Treibmittel wie z.B. n-Pentan, Monofluortrichlormethan und gegebenenfalls in Gegenwart weiterer Zusatzstoffe wie Plastifizierungsmittel, Flammschutzmittel, Füllstoffe, Fasern, Verstärkungsmittel und Farbstoffe, durch Zugabe eines Härtungskatalysators das Harz in stark exothermer Bildungsreaktion zum Aminoplasten polykondensiert und dabei die Mischung selbständig aufschäumt und erstarrt.

10. Verfahren nach Anspruch 9,

dadurch gekennzeichnet,

daß als Härtungskatalysator Phosphorsäure eingesetzt wird.

11. Verfahren nach Ansprüchen 9 bis 10,

dadurch gekennzeichnet,

daß der Harzlösung und/oder der Härtersäure ein Amin, vorzugsweise Triäthanolamin, in Mengen von 0,3 bis 10 Gew.-% bezogen auf den Feststoffgehalt zugesetzt wird.

12. Verfahren nach Ansprüchen 9 bis 11,

dadurch gekennzeichnet,

daß die Verschäumung in Gegenwart von Kohlenhydraten, vorzugsweise Rohrzucker und/oder dessen Zersetzungsprodukten, in Mengen bis zu 20 Gew.-% bezogen auf den Feststoffgehalt, durchgeführt wird.

13. Verfahren nach Ansprüchen 9 bis 12,

dadurch gekennzeichnet,

daß die Verschäumung in Gegenwart von Cyanamid bzw. Dicyandiamid, in Mengen von 0,5 bis 10 Gew.-% vorzugsweise 1 bis 5 Gew.-% bezogen auf den Feststoffgehalt, durchgeführt wird.

14. Schaumprodukte nach Ansprüchen 1 bis 13,

dadurch gekennzeichnet,

daß sie bei Einwirkung von Feuer oder Strahlungshitze eine stark aufschäumende Kohleschutzschicht ausbilden.

## CLAIMS

1. A strongly exothermically hardening urea-formaldehyde resin, characterised in that it is obtained by a) condensation of 1 mole of urea with from 1.2 to 3 moles,

but preferably with from 1.7 to 2.2 moles of formaldehyde in an exclusively alkaline medium at an initial pH value of the aqueous commercial formaldehyde solution of from 8 to 12, preferably 9 to 11,

b) in the presence of from 1 to 10 m moles NaOH and from 10 to 80 m moles $NH_3$ or

in the presence of from 2.5 to 50 m moles of guanidine base and from 0 to 80 moles $NH_3$ per 1 mole of formaldehyde, at

c) a condensation temperature of from 80 to 105°C and

d) a condensation time of from 2 to 4 hours, preferably 2.5 to 3.5 hours and

e) subsequent concentration in a vacuum to from 75 to 100% solid content.

2. A strongly exothermically hardening urea-formaldehyde resin according to Claim 1, characterised by the addition before, during or after, but preferably before condensation, of up to 20% by weight, in relation to the solid content, of carbohydrates and/or their thermal decomposition products.

3. A strongly exothermically hardening urea-formaldehyde resin according to Claims 1 and 2, characterised in that cane sugar is used as the carbohydrate.

4. A strongly exothermically hardening urea-formaldehyde resin according to Claims 1 to 3, characterised in that caramel or sugar-dye is used the thermal decomposition product.

5. A strongly exothermically hardening urea-formaldehyde resin according to Claims 1 to 4, characterised by the addition, before, during or after condensation, cyanamide or dicyandiamide in quantities of from 5 to 60 m moles per 1 mole of urea.

6. A strongly exothermically hardening urea-formaldehyde resin according to Claims 1 to 5, characterised in that it has a reactivity of from 10 to 90°C, preferably 30 to 60°C.

7. A strongly exothermically hardening urea-formaldehyde resin according to Claims 1 to 6, characterised in that it has a viscosity of from 4 to 30 Pa.s, preferably 4 to Pa.s at 25°C with a solid content of 83%, for example.

8. Use of the strongly exothermically hardening urea-formaldehyde resin according to Claims 1 to 7 for the preparation of foamed products.

9. A method for the preparation of foamed products of strongly exothermically hardening urea-formaldehyde resin according to Claims 1 to 7, characterised in that in the presence of emulsifiers, blowing agents with a low boiling point, for example n-pentane, monofluorotrichloromethane and, optionally, in the presence of further additives, such as plasticizers, fire-resistant agents, fillers, fibres, reinforcing agents and colouring agents, by adding a hardening catalyst the resin is polycondensed in a strongly exothermic reaction to form amino plastics, whereupon the mixture foams and solidifies unassisted.

10. A method according to Claim 9, characterised in that phosporic acid is used as the hardening catalyst.

11. A method according to Claims 9 and 10, characterised by adding to the resin solution and/or the hardener acid an amine, preferably triethanol amine, in quantities of from 0.3 to 10% by weight in relation to the solid content.

12. A method according to Claims 9 to 11, characterised in that the foaming is carried out in the presence of carbohydrates, preferably cane sugar and/or its decomposition products, in quantities of up to 20% by weight in relation to the solid content.

13. A method according to Claims 9 to 12, characterised in that the foaming is carried out in the presence of cyanamide or dicyandiamide in quantities of from 0.5 to 10% by weight, preferably 1 to 5% by weight in relation to the solid content.

14. Foamed products according to Claims 1 to 13, characterised in that they form a strongly foaming carbon protective layer when subjected to the effect of fire or radiation heat.

## Revendications

1. Résine d'urée-formaldéhyde à durcissement fortement exothermique, caractérisée en ce qu'on l'obtient par:

a) condensation d'une mole d'urée avec 1,2 à 3 moles, mais de préférence 1,7 à 2,2 moles de formaldéhyde dans un milieu exclusivement alcalin à une valeur de pH initiale de la solution aqueuse de formaldéhyde courante dans le commerce de 8 à 12, de préférence de 9 à 11,

b) en présence de 1 à 10 millimoles de NaOH et de 10 à 80 millimoles de $NH_3$ par mole de formaldéhyde,

c) à une température de condensation de 80 à 105°C et

d) pendant une durée de condensation de 2 à 4 heures, de préférence de 2,5 à 3,5 heures, et

e) concentration subséquente dans le vide jusqu'à obtention d'une teneur en matières solides de 75 % à 100 %.

2. Résine d'urée-formaldéhyde à durcissement fortement exothermique selon la revendication 1, caractérisée en ce qu'avant, pendant ou après, mais de préférence avant la condensation, on ajoute des glucides et/ou leurs produits de décomposition thermique, jusqu'à un pourcentage de 20 % en poids rapporté à la teneur en matières solides.

3. Résine d'urée-formaldéhyde à durcissement fortement exothermique selon les revendications 1 et 2, caractérisée en ce qu'on utilise, comme glucides, du sucre de canne.

4. Résine d'urée-formaldéhyde à durcissement fortement exothermique selon les revendications 1 à 3, caractérisée en ce qu'on utilise, comme produits de décomposition thermique, des glucides, du caramel ou de la teinture de caramel.

5. Résine d'urée-formaldéhyde à durcissement fortement exothermique, selon les revendications 1 à 4, caractérisée en ce qu'avant, pendant ou après la condensation, on ajoute du cyanamide ou du dicyandiamide dans des proportions de 5 à 60 millimoles par mole d'urée.

6. Résine d'urée-formaldéhyde à durcissement fortement exothermique selon les revendications 1 à 5, caractérisée en ce qu'elle présente une réactivité de 10 à 90°C, de préférence de 30 à 60°C.

7. Résine d'urée-formaldéhyde à durcissement fortement exothermique selon les revendications 1 à 6, caractérisée en ce qu'elle présente une viscosité de 4 à 30 Pa.s, de préférence de 4 à 10 Pa.s à 25°C, pour une teneur en matières solides de, par exemple, 83 %.

8. Application de la résine d'urée-formaldéhyde à durcissement fortement exothermique selon les revendications 1 à 7 à la préparation de produits mousses.

9. Procédé de préparation de produits mousses à partir de résine d'urée-formaldéhyde à durcissement fortement exothermique selon les revendications 1 à 7, caractérisé en ce qu'on effectue sur la résine, en présence d'émulsionnants, de produits moussants à faible point d'ébullition comme, par exemple, le n-pentane, le monofluorotrichlorométhane et éventuellement en présence d'autres additifs tels que des plastifiants, des agents d'ignifugation, des charges, des fibres, des agents de concentration et des colorants, en ajoutant un catalyseur de durcissement, une polycondensation aboutissant à l'aminoplaste par une réaction de formation fortement exothermique, le mélange moussant et durcissant de façon autonome.

10. Procédé selon la revendication 9, caractérisé en ce qu'on utilise, comme catalyseur de durcissement, de l'acide phosphorique.

11. Procédé selon les revendications 9 et 10, caractérisé en ce qu'on ajoute à la solution de résine et/ou à l'acide de durcissement, une amine, de préférence la triéthanolamine, dans des proportions de 0,3 à 10 % en poids, rapportées à la teneur en matières solides.

12. procédé selon les revendications 9 à 11, caractérisé en ce qu'on effectue le moussage en présence de glucides, de préférence de sucre de canne et/ou de ses pro
duits de décomposition, dans des proportions pouvant atteindre un pourcentage de 20 % en poids rapporté à la teneur en matières solides.

13. Procédé selon les revendications 9 à 12, caractérisé en ce qu'on effectue le moussaqe en présence de cyanamide ou de dicyandiamide, dans des proportions de 0,5 à 10 % en poids, de préférence de 1 à 5 % en poids, rapportées à la teneur en matières solides.

14. Produits mousses selon les revendications 1 à 13, caractérisés en ce qu'ils forment une couche protectrice de carbone moussant fortement sous l'action du feu ou de chaleur irradiée.